(19) **Europäisches Patentamt**
**European Patent Office**
**Office européen des brevets**

(11) **EP 2 279 612 B1**

(12) **EUROPEAN PATENT SPECIFICATION**

(45) Date of publication and mention
of the grant of the patent:
**20.03.2013 Bulletin 2013/12**

(21) Application number: **08769645.6**

(22) Date of filing: **22.05.2008**

(51) Int Cl.:
*H04N 9/04* (2006.01)     *H04N 9/67* (2006.01)
*H04N 17/00* (2006.01)    *H04N 17/02* (2006.01)
*H04N 5/357* (2011.01)

(86) International application number:
**PCT/US2008/064584**

(87) International publication number:
**WO 2009/142641 (26.11.2009 Gazette 2009/48)**

(54) **CAMERA SENSOR CORRECTION**

KAMERASENSORKORREKTUR

CORRECTION DE CAPTEUR DE CAMÉRA

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**02.02.2011 Bulletin 2011/05**

(73) Proprietor: **Hewlett-Packard Development
Company, L.P.
Houston, TX 77070 (US)**

(72) Inventors:
 • **WANG, Yu-wei
   Fort Collins, CO 80528 (US)**
 • **MATHERSON, Kevin
   Fort Collins
   Co 80525 (US)**

 • **SOBOL, Robert
   Fort Collins
   CO 80525 (US)**

(74) Representative: **Stöckeler, Ferdinand et al
Patentanwälte SCHOPPE, ZIMMERMANN,
STÖCKELER, ZINKLER & PARTNER
P.O. Box 246
82043 Pullach (DE)**

(56) References cited:
**GB-A- 2 402 290        JP-A- 2000 324 505
US-A1- 2003 234 864     US-A1- 2003 234 872
US-B1- 6 707 500        US-B2- 7 075 569
US-B2- 7 233 352**

**Description**

## BACKGROUND

Digital cameras include at least one camera sensor, such as, e.g., a charge coupled device or "CCD" or complementary metal oxide semiconductor (CMOS) sensor. The digital camera includes a plurality of photosensitive cells, each of which builds-up or accumulates an electrical charge in response to exposure to light. The accumulated electrical charge for any given pixel is proportional to the intensity and duration of the light exposure, and is used to generate digital photographs.

One of the most challenging aspects of designing a compact high-resolution camera is the limitation on the overall volume of the camera. With a typical target height being less than 6 mm, very compact sensors must be used. These sensors require miniature pixel designs that exhibit reduced sensitivity, increased noise, increased color crosstalk, and increased color disparity. These compact designs often exhibit excessive vignetting due to the variation in the angle of incidence of the light rays striking the center of the camera sensor, which may be directly behind the camera lens, versus the light rays striking the edge of the camera sensor, which strike at highly oblique angles.

In addition to non-color-dependent vignetting, digital cameras may also exhibit color-dependent vignetting. For example, when an image of a uniformly illuminated neutral surface (e.g., a white wall) is captured, the resulting digital image may be undesirably tinted by pink, green, or blue hues. The exact color and
shape of these areas changes with illuminant type and the scene being photographed. There are many causes to these observed hue shifts, depending on the optical system, sensor, electronics, and their interactions.
US 2003/234864 A1 discloses a method and an apparatus for producing calibration data to remove vignetting, e.g., color-dependent vignetting for a digital camera. A white reference surface that is to be imaged is arranged in front of the camera. A characteristic array of data corresponding to an image of the reference surface for each color that the camera can image is captured via the camera. Each characteristic array is manipulated to reduce a total amount of data representing the reference image.

US 2003/0234872 A1 discloses a method and an apparatus for color non-uniformity correction in a digital camera. For each color that said camera can image, a raw array of data corresponding to a desired scene is provided. The raw arrays are changed such that the array for each color exhibits substantially the same amount of vignetting so as to reduce color-dependent vignetting in a composite image based upon each of the changed arrays.

The invention provides for a method according to claim 1 and a system according to claim 11.

## BRIEF DESCRIPTION OF THE DRAWINGS

**Figure 1a** is a diagram showing the positional dependence of color shading at different locations along an imaging sensor.

**Figure 1b** is a component diagram of an exemplary camera system.

**Figure 2** are high-level diagrams of an exemplary camera sensor.

**Figure 3** shows exemplary plots of sensor and lens spectral responses at different spatial locations on an exemplary sensor.

**Figure 4** shows exemplary plots of sensor and lens spectral responses for the exemplary sensor of Figure 3 after normalizing and plotting together.

**Figure 5** shows plots of sensor and lens spectral responses at different spatial locations on a sensor on another exemplary sensor.

**Figure 6** shows exemplary plots of sensor and lens spectral responses for the exemplary sensor of Figure 5 after normalizing and plotting together.

**Figure 7** is a flowchart illustrating exemplary operations which may be implemented for camera sensor correction.

## DETAILED DESCRIPTION

Systems and methods are disclosed herein for correction of color-dependent and non-color-dependent vignetting of digital camera sensors. As these effects vary spatially across the area of the sensor, an image processing algorithms can be used to correct these undesirable effects. These algorithms may make use of a mathematical model to fit a correction mask (polynomial, elliptical, circular, and so forth) or may store the actual correction mask at a smaller resolution due to memory constraints.

Some approaches to camera sensor correction may assume that a single correction factor can be acquired from a flat-field image at a known reference color temperature. While this approach may provide sufficient correction for sensor and lens combinations that do not exhibit color crosstalk or for sensors whose optical crosstalk does not vary with the wavelength of reflected light from different types of surfaces, these assumptions may not work well for ultra-compact devices (e.g., as used in mobile imaging devices). This is to say that a single linear multiplicative constant may not result in an overlapping spectral response as will be described herein.

Compact lens systems used for digital imaging devices are typically constructed of three to four lens elements and an infrared cutoff filter that is used to limit the optical bandpass of the light transmitted through the lens. Such lenses have very steep ray angles which causes two undesirable effects on the image: optical crosstalk and spectral crosstalk.

The area sensors used in many imaging devices generally include a mosaic of color filters arranged in a Bayer pattern. A Bayer pattern is constructed with one row of the sensor containing alternating red and green pixels (R and Gr), with the second row of the sensor contains alternating blue and green pixels (B and Gb). Thus, optical crosstalk occurs when light destined for either the red, green, or blue pixel is collected by an adjacent pixel of a different color. The amount of hue shift caused by optical crosstalk changes in the horizontal and vertical axes of the imaging sensor. Optical crosstalk has the effect of reducing the amount of light collected by each pixel as well as aberrating the color information used in processing the image. Accordingly, in an exemplary embodiment of the invention, a four-color spatially varying correction scheme is implemented when there is a difference in the spectral response of the green channels on the red row and the green channels on the blue row, as explained in more detail below.

Optical crosstalk can also be affected by the IR-cut filter, which limits the wavelength of the light captured by the image sensor. When light incident on the filter is not perpendicular to the coating surface of the sensor, there is a spatially-varying spectral transmittance shift of the cutoff wavelength towards shorter wavelengths. This spatially-varying spectral transmittance causes a spatially varying hue shift across the sensor. The unequal color separation of the color filters is sometimes referred to as spectral crosstalk.

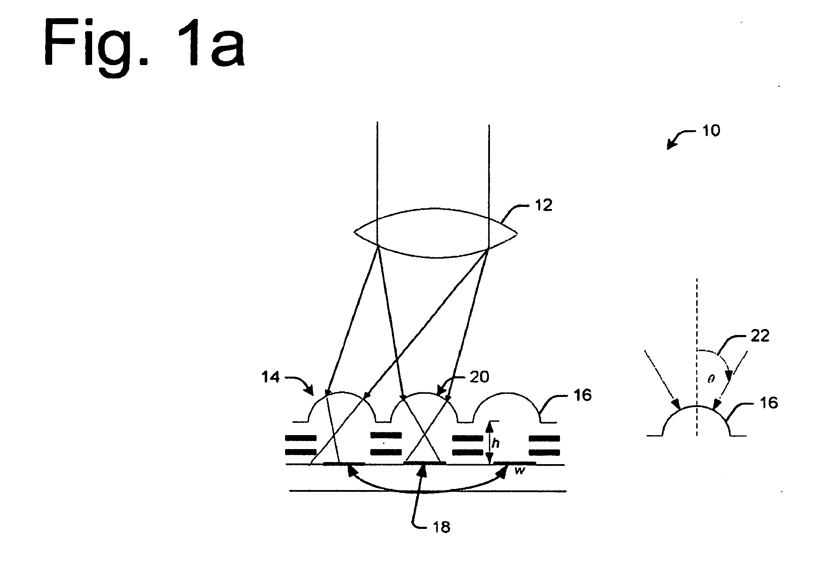

**Figure 1a** is a diagram 10 showing the positional dependence of color shading at different locations along an imaging sensor. Figure 1a includes an imaging lens 12, a sensor array comprising off-axis microlenses 14 and 16, on-axis pixels 18, an on-axis microlens 20, incident light ray angle 22. When light is incident at on-axis microlens 20 for small values of angle 22 ($\theta \approx 0$), substantially all of the light from imaging lens 12 is collected by on-axis pixel 18. In contrast, when light is incident at an oblique angle 22 ($\theta \gg 0$), for example at off-axis microlens 14, a significant portion of the incident light is not captured by the underlying pixel and is lost. Thus, as the light angle 22 ($\theta$) increases, moving to the right or to the left of on-axis micro lens 20, more incident light is lost. Consequently, the amount of light captured by the pixel depends on its location relative to the center of the imaging array and positional-dependent shading occurs.

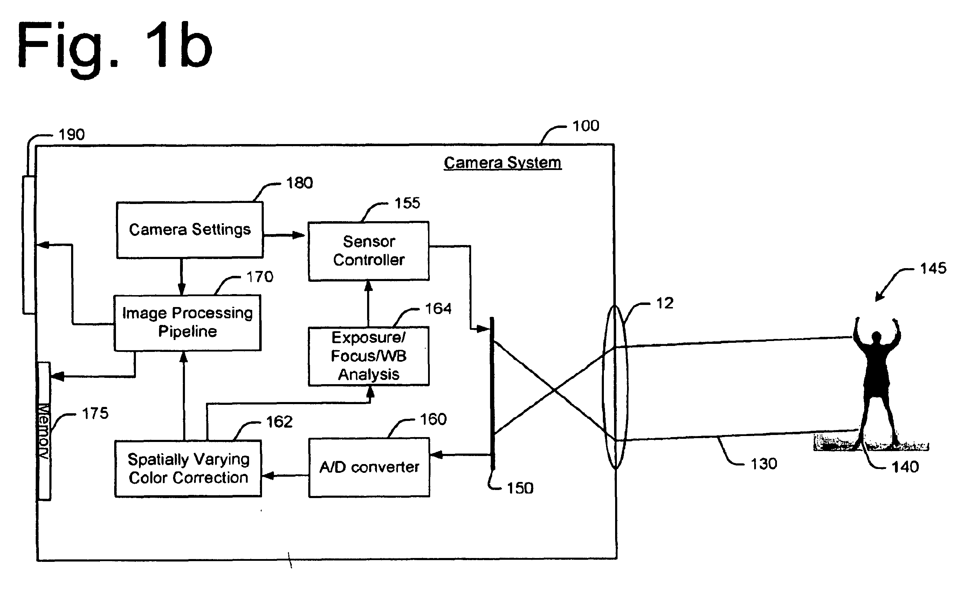

**Figure 1b** is a component diagram of an exemplary camera system 100. Although reference is made to a particular digital still-photo camera system 100, it is noted that the systems and methods described herein may be implemented with any of a wide range of sensors for any of a wide variety of applications (e.g., camera phones, digital cameras, video cameras, scanners, medical imaging, and other electronic imaging devices), now known or that may be later developed.

There are many different types of image sensors that may be used in exemplary camera system 100. One way to classify image sensors is by their color separation mechanism. Typical image sensors in a digital imaging system consist of a mosaic type of sensor over which is formed a filter array that includes the additive colors red, green, and blue. Each pixel of the sensor includes a corresponding red, green, or blue filter area arranged in a repeating two-line pattern. The first line contains alternating red and green pixels with the second line containing alternating blue and green pixels. The separate color arrays of images formed by each pixel are then combined to create a full-color image after suitable processing.

Other mosaic color filter patterns are also possible. Embodiments of the invention may include color filters having cyan, magenta, yellow, and key (CMYK); or red, green, blue, teal (RGBT); red, white, blue, green (RWBG); and so forth. In one variant of the mosaic sensor, a sensor containing color filters arranged in stripes across the array may be used. Another type of sensor relies on the phenomenon that different wavelengths of light penetrate silicon to different depths. This type of sensor may use an array of photo sites, each of which consists of three vertically stacked photodiodes organized in a two-dimensional grid. In such an embodiment, each of the three stacked photodiodes responds to different colors of light. Signals from the three photodiodes are processed to form an image. However, all of the embodiments described herein will work with any of the above-described sensors.

Returning now to **Figure 1b**, exemplary camera system 100 may include a lens 12 positioned in camera system 100 to focus light 130 reflected from one or more objects 140 in a scene 145 onto a camera sensor 150. Exemplary lens 12 may be any suitable lens which focuses light 130 reflected from the scene 145 onto camera sensor 150.

Camera system 100 may also include an analog-to-digital converter ("A/D") 160. In digital cameras, the analog-to-digital converter 160 digitizes the analog signal from the camera sensor 150 and outputs it to a spatially-varying color correction module 162 which is connected to an image processing pipeline 170, and an exposure/focus/WB analysis module 164. The A/D 160 generates image data signals representative of the light 130 captured during exposure to the scene 145. The sensor controller 155 provides signals to the image sensor that may be implemented by the camera for auto-focusing, auto-exposure, pre-flash calculations, image stabilizing, and/or detecting white balance, to name only a few examples.

The camera system 100 may be provided with an image processing pipeline or module 170 operatively associated with a sensor controller 155, and optionally, with camera settings 180. The image processing module 170 may receive as input image data signals from the spatially varying color correction module 162. Image processing module 170 may be implemented to perform various calculations or processes on the image data signals, e.g., for output on the display 190 or to memory 175.

In an exemplary embodiment, the spatially varying color correction module 162 may be implemented to correct for defects in the digital image caused by optical crosstalk, spectral crosstalk, or changes in sensor spectral sensitivity. The spatially varying color correction module 162 may apply a correction factor to each pixel (or group of pixels) based on the location of the pixel or group of pixels on the camera sensor 150.

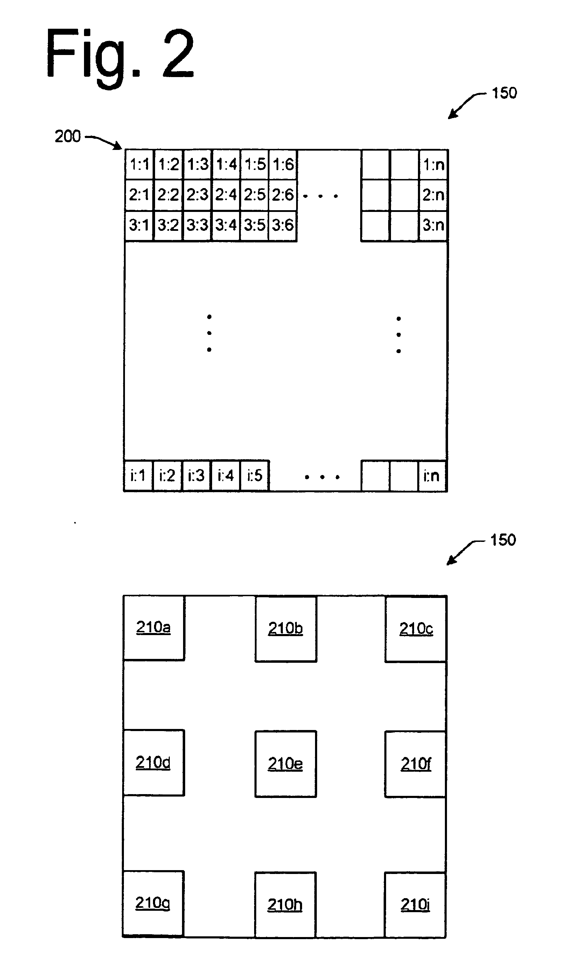

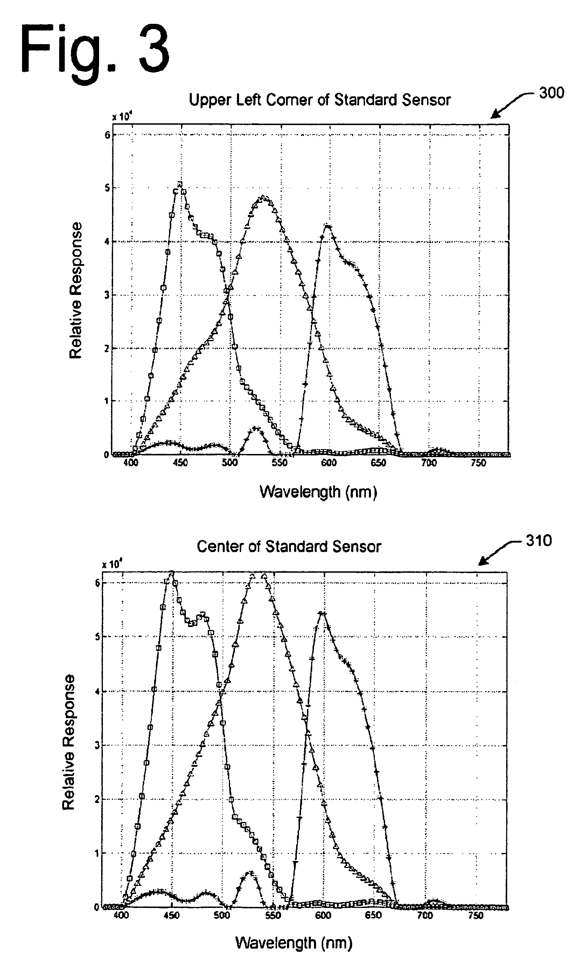

It is noted that output by the camera sensor 150 may be different under various conditions due to any of a wide variety of factors (e.g., test conditions, light wavelength, altitude, temperature, background noise, sensor damage, zoom, focus, aperture, etc.). Anything that varies the optical behavior of the imaging system can affect color shading. Accordingly, in exemplary embodiments the sensor may be corrected "on-the-fly" for each digital image or at various times (e.g., various seasons, geographic locations, or based on camera settings or user selections), instead of basing correction on an initial calibration of the camera sensor 150 by the research and development team or manufacturer. Exemplary embodiments for camera sensor correction can be better understood with reference to the exemplary camera sensor shown in Figure 2 and illustrations shown in Figure 3-6.

Figure 2 is a high-level diagram of an exemplary camera sensor 150, such as the camera sensor described above for camera system 100 shown in Figure 1b. For purposes of this illustration, the camera sensor 150 is implemented as an interline CCD. However, the camera sensor 150 is not limited to interline CCDs. For example, the camera sensor 150 may be implemented as a frame transfer CCD, an interlaced CCD, CMOS sensor, or any of a wide range of other camera sensors now known or later developed. For example, while discussion herein is directed to correcting color-dependent shading in the camera, these operations may also be performed on a computer on unprocessed ("raw") images.

In an interline CCD, every other column of a silicon sensor substrate is masked to form active photocells (or pixels) 200 and inactive areas adjacent each of the active photocells 200 for use as shift registers (not shown). Although n columns and i rows of photocells are shown, it is noted that the camera sensor 150 may include any number of photocells 200 (and corresponding shift registers). The number of photocells 200 (and shift registers) may depend on a number of considerations, such as, e.g., image size, image quality, operating speed, cost, etc.

During operation, the active photocells 200 become charged during exposure to light reflected from the scene. This charge accumulation (or "pixel data") is then transferred to the shift registers after the desired exposure time, and may be read out from the shift registers.

In exemplary embodiments, the camera sensor may be sampled as illustrated by photocell windows 210a-i. For purposes of illustration, nine windows 210a-i are shown corresponding substantially to the corners, edges, and middle of the camera sensor.

The image can be described as having a width *DimX* and an image height *DimY.* Then the spatial location of the center of each window (left to right and top to bottom) is described using the following coordinates:

| (50, 50) | ((DimX-1)/2, 50) | ((DimX-1) - 50, 50) |
|---|---|---|
| (50, (DimY-1)/2) | ((DimX-1)/2, (DimY-1)/2) | ((DimX-1) - 50, (DimY-1)/2) |
| (50, (DimY-1)-50) | ((DimX-1)/2, (DimY-1)-50) | ((DimX-1) - 50, (DimY-1)-50) |

The coordinates of the upper left corner is given by the coordinates (0, 0). Each window 210a-i is approximately 100x100 pixels in this example. However, it is understood that any suitable size window may be implemented to obtain pixel data for the camera sensor and will depend at least to some extent on design considerations (e.g., processing power, compute power, desired time to completion, etc.). For example, smaller windows (e.g., single pixel windows) may be used for an initial calibration procedure, while larger windows may be used for on-the-fly data collection. In any event, the pixel data may be used to identify optical crosstalk and spectral crosstalk for individual pixels or groups of pixels, as explained in more detail with reference to Figures 3-6.

Figure 3 shows exemplary plots 300 and 310 of sensor and lens spectral responses at different spatial locations on an exemplary sensor, such as may be implemented in a standard digital camera. In a standard digital camera, the lens is more telecentric (quasi-telecentric), meaning that the light angles are nearly parallel to the optical axis (e.g., less than a few degrees) so that when light strikes the sensor, the light strikes the sensor almost perpendicular to the sensor. During operation, the camera sensor is exposed to light reflected from the scene being photographed. In this example, a monochromator was used to generate the pixel output at various wavelengths. Of course, this response is not limited to being generated by a monochromator. Other ways of generating this response include but are not limited to using a known spectral property of a set of lights or other type of device that can output spectrally varying light of a known value.

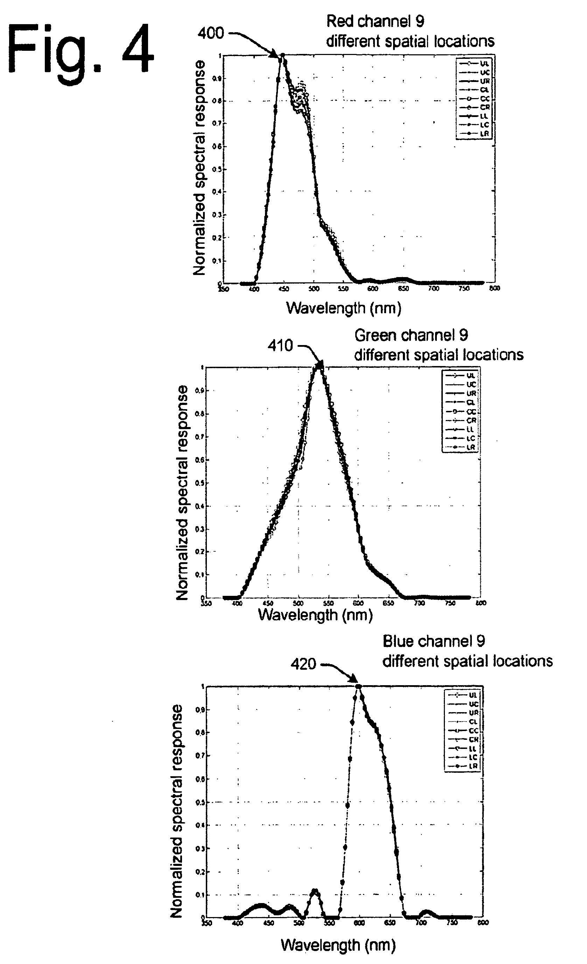

After the desired exposure time, the pixel data may be transferred from the active photocells to the shift registers (not shown), read out, and the pixel data analyzed, as shown in the plots 300, 310. For purposes of simplification and contrast, pixel data is shown plotted 300 for the upper-left corner of the sensor (e.g., window 210a in Figure 2) and plotted 310 for the center of the sensor (e.g., window 210e in Figure 2). Separate responses for plotted for Red, Blue, and Green. The response shown is indicative of color crosstalk that results in color shading. Pixel data from each window (e.g., 100x100 pixels) is averaged to produce normalized spectral response curves, as shown in Figure 4.

Figure 4 shows exemplary plots 400, 410, 420 of sensor and lens spectral responses typical of a higher-end digital camera for the exemplary sensor of Figure 3 after normalizing and plotting together. It is noted that these plots include all of the windows and not just those shown in Figure 3. It can be seen the spectral responses overlap regardless of spatial position. In this case, the normalized plots indicate that the spectral response of a given color channel at a given spatial location is linearly scalable. Accordingly, the gain mask is described by a linear combination of each of the color planes using different multiplicative constants depending on the spatial location. Such linear corrections work well for sensor and lens combinations that do not contain large amounts of color crosstalk, pixel vignetting, spectral sensitivity variations, or for sensors whose optical crosstalk does not vary with the wavelength of reflected light from different types of surfaces, as is true for many digital still cameras.

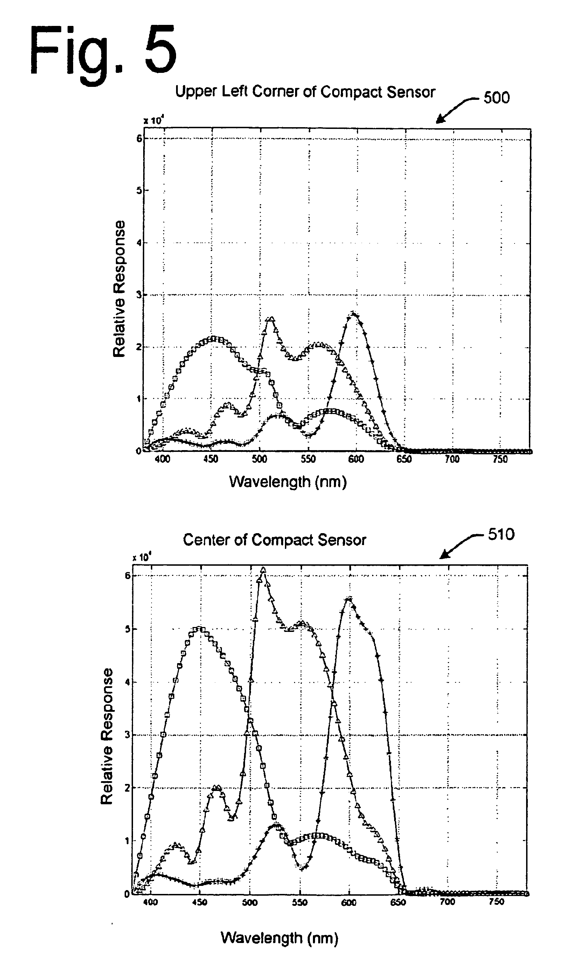

Figure 5 shows plots of sensor and lens spectral responses at different spatial locations on a sensor on another exemplary sensor, such as may be implemented in a compact digital camera (e.g., a cell phone camera). In a compact digital camera, the lens is less telecentric, meaning that the light ray angles strike the corner of the sensor at a steep angle of incidence relative to the light rays which strike the center of the sensor. Again in this example, a monochromator was used to generate the pixel output at various wavelengths, but is not limited to being generated by a monochromator. Other ways of generating this response include but are not limited to using a known spectral property of a set of lights or other type of device that can output spectrally varying light of a known value.

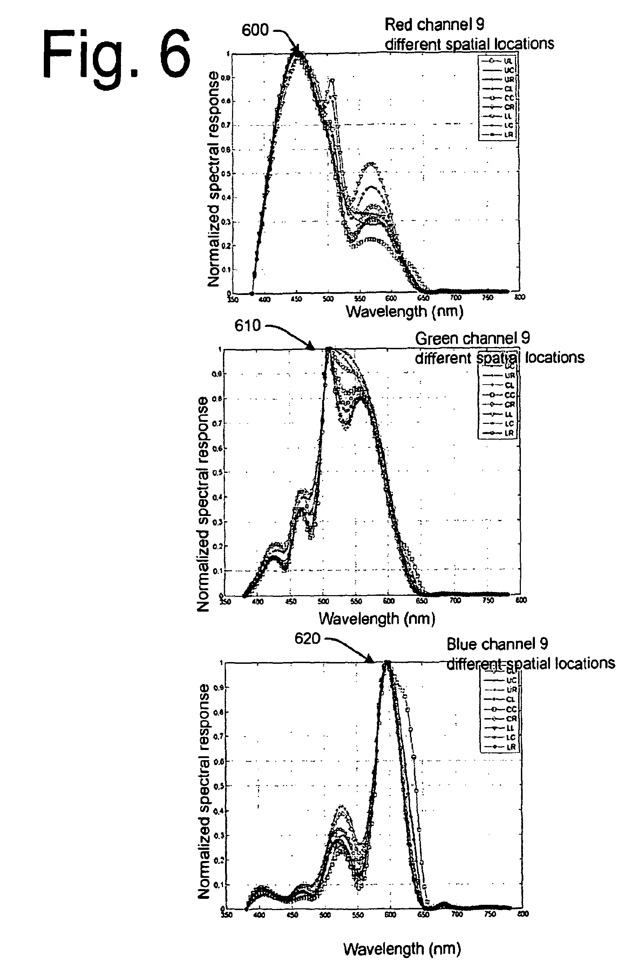

After the desired exposure time, the pixel data may be transferred from the active photocells to the shift registers (not shown), read out, and the pixel data analyzed, as shown in the plots 500, 510. For purposes of simplification and contrast, pixel data is again shown plotted 500 for the upper-left corner of the sensor (e.g., window 210a in Figure 2) and plotted 510 for the center of the sensor (e.g., window 210e in Figure 2). This response is also indicative of color crosstalk that results in color shading for the smaller sensor application. Again, the pixel data from each window (e.g., 100x100 pixels) is averaged to produce normalized spectral response curves, as shown in Figure 6.

Figure 6 shows exemplary plots 600, 610, and 620 of sensor and lens spectral responses for the exemplary sensor of Figure 5 after normalizing and plotting together. It can be seen the spectral responses vary based on spatial position. In this case, the normalized plots indicate that the spectral response of a given color channel at a given spatial location are not linearly scalable.

Instead, an MxN (e.g., 4x4, or more depending on the number of colors) color correction matrix may be implemented for groups of pixels (or assuming sufficient computational power and memory, each pixel) in the image. An exemplary matrix is given as:

$$\begin{bmatrix} R_{corr} \\ Gr_{corr} \\ Gb_{corr} \\ B_{corr} \end{bmatrix} = \begin{bmatrix} K00 & K01 & K02 & K03 \\ K10 & K11 & K12 & K13 \\ K20 & K21 & K22 & K23 \\ K30 & K31 & K32 & K33 \end{bmatrix} \begin{bmatrix} R_{sensor} \\ Gr_{sensor} \\ Gb_{sensor} \\ B_{sensor} \end{bmatrix}$$

It is noted that $R_{sensor}$, $Gr_{sensor}$, $Gb_{sensor}$, $B_{sensor}$ and $R_{corr}$, $Gr_{corr}$, $Gb_{corr}$, $B_{corr}$ in the example above are not unique and limited to single color pixel values. Those skilled in the art will appreciate that any of the color plane representations can be used, such as, e.g., groups of locally-averaged pixel values.

The pixel values before and after the spatially-varying color shading correction can be considered a process in which the un-corrected color-channel data is input to a matrix, operated on by that matrix, and output as a color-shading-corrected data set. There are several possible cases in which the color-dependent vignetting can be corrected. One is in which the uncorrected sensor data is operated on by an *MxN* correction matrix that returns a corrected vector of color channels prior to the demosaic process. Another example is that the uncorrected data has been demosaiced and then is operated on by a correction matrix that returns a color-shading corrected vector of sensor values post demosaic. The final scenario is one in which the uncorrected sensor values are demosaiced and corrected for spatially-varying color-dependent vignetting as part of the demosaic process. This process can also be completed as part of a transformation from one color space to another such as converting from sensor RGB to sRGB, YUV, or YCC, and so forth. In the case of including other color space conversions one can use an exemplary matrix given as:

$$
\begin{bmatrix} Y_{corr} \\ Cb_{corr} \\ Cr_{corr} \end{bmatrix} = \begin{bmatrix} K00 & K01 & K02 & K03 \\ K10 & K11 & K12 & K13 \\ K20 & K21 & K22 & K23 \end{bmatrix} \begin{bmatrix} R_{sensor} \\ Gr_{sensor} \\ Gb_{sensor} \\ B_{sensor} \end{bmatrix}
$$

In an exemplary embodiment, four colors, *R, Gr, Gb, and B* describe the red, green on the red row, green on the blue row, and blue color channels, respectively. *K00* through *K33* describe the correction coefficients. The number of color correction matrices equals the actual image resolution, and the 4x4 matrix converts the spectral response of each color plane at a given spatial location to match the spectral response of the sensor in the center of the image.

This approach may be incorporated into the procedure for finding the module spectral response without requiring additional calibration images. This is due to the fact that the color correction matrices and spectral responses are required from different spatial locations of the calibration images; however, the correction and calibration process in the current invention do not require an increase in the number of images. Therefore, computation time increases but not the number of calibration images needed. The traditional color shading and vignetting correction and color rendering are no longer needed because such tasks are now part of the proposed spatially-varying mxn color correction. In an exemplary embodiment this spatially-varying color correction could be combined with the transformation to other color spaces such as sensor RGB to sRGB, sensor RGB to YUV, or sensor RGB to YCC. It will however, be evident to those skilled in the art that various changes and modifications may also be made.

To simplify the proposed invention, one can choose to measure spatially varying spectral responses at a lower resolution. For example, nine equally-spaced windows of 4x4 matrices may be implemented. For other pixels in between the nine windows, interpolation may be used to find the matrices for other spatial sample locations. The choice in the number of spatial location is a trade off between color precision and computational and memory performance.

In order to convert any of the aforementioned sensor's color data into a full-color image, some sort of pixel processing algorithm is required. In mosaic sensors, a demosaic algorithm is used. It is noted to those skilled in the art, that the spatially-varying color correction could be applied as part of the demosaic algorithm. In the case of sensors not requiring a demosaic algorithm, this step could be applied as part of the broader imaging task.

It is noted that the illustrations described above with reference to Figures 3-6 are merely exemplary and not intended to be limiting. Other features and/or modifications may also be implemented, as will be readily appreciated by those having ordinary skill in the art after becoming familiar with the teachings herein.

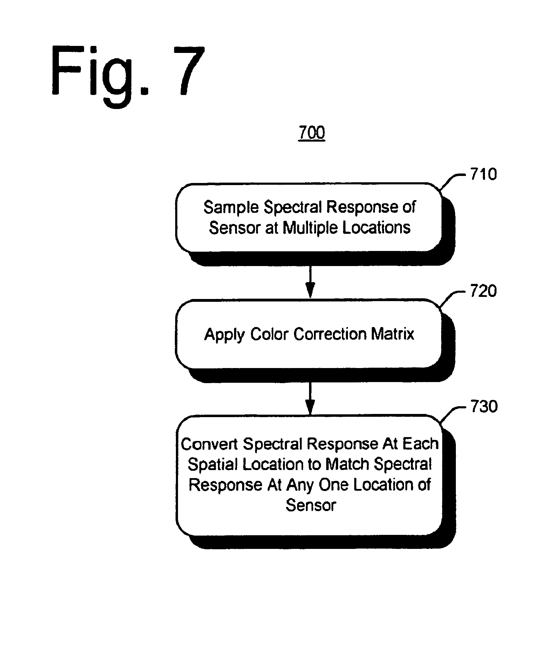

Figure 7 is a flowchart illustrating exemplary operations which may be implemented for camera sensor correction. Operations 700 may be embodied as logic instructions on one or more computer-readable medium. When executed on a processor, the logic instructions cause a general purpose computing device to be programmed as a special-purpose machine that implements the described operations. In an exemplary implementation, the components and connections depicted in the figures may be used.

In operation 710, a spectral response is sampled for a plurality of color channels at different spatial locations on a sensor. In operation 720, a color correction matrix is applied at the different spatial locations in an image captured by the sensor. In operation 730, the spectral response at each spatial location is converted to match the spectral response of the sensor at any one location (e.g., center or substantially the center or other location) on the image.

The operations shown and described herein are provided to illustrate exemplary implementations for camera sensor correction. The operations are not limited to the ordering shown. In addition, still other operations may also be implemented as will be readily apparent to those having ordinary skill in the art after becoming familiar with the teachings herein.

It is noted that the exemplary embodiments shown and described are provided for purposes of illustration and are not intended to be limiting. Still other embodiments are also contemplated for camera sensor correction

In embodiments of the inventive system, the signal processing logic further determines the spectral response for a plurality of windows on the image. In embodiments of the inventive system, the signal processing logic further determines the spectral response for each pixel on the image. In embodiments of the inventive system, the signal processing logic further determines if the spectral response varies based on spatial position. In embodiments of the inventive system, the signal processing logic further determines if the spectral response of a color channel at a given spatial location is not linearly scalable. In embodiments of the inventive system, the signal processing logic further determines if the spectral response of a color channel overlaps based on spatial position

Embodiments of the invention provide for a method of correction color-dependent vignetting, comprising inputting uncorrected color-channel data to a matrix; operating on the uncorrected color-channel data by the matrix; and outputting a color-shading-corrected data set. In such embodiments of the invention, the uncorrected color-channel data may be operated on by an *mxn* correction matrix that returns a corrected vector of color channels prior to a demosaic process. In such embodiments of the invention, the uncorrected color-channel data may be demosaiced before being operated on by a correction matrix that returns a color-shading corrected vector of sensor values post-demosaic. In such embodiments of the invention, the uncorrected color-channel values may be demosaiced and corrected for spatially-varying color-dependent vignetting as part of a demosaic process. Such embodiments of the invention may further comprise a transformation from one color space to another.

**Claims**

1. A method for correcting a sensor for optical crosstalk and spectral crosstalk comprising:

   sampling a spectral response for a plurality of color channels at different spatial locations on a sensor;
   implementing a color correction matrix for each of the different spatial locations; and
   applying the corresponding color correction matrix at each of the different spatial locations in an image captured by the sensor so that the spectral response at each spatial location is converted to match the spectral response of any one location on the image.

2. The method of claim 1, wherein spectral response is determined for a plurality of windows on the image.

3. The method of claim 1, wherein spectral response is determined for each pixel on the image.

4. The method of claim 1, further comprising first determining if the spectral response varies based on spatial position.

5. The method of claim 1, further comprising first determining if the spectral response of a color channel at a given spatial location is not linearly scalable.

6. The method of claim 1, further comprising determining if the spectral response of a color channel overlaps based on spatial position.

7. The method of claim 1, further comprising normalizing the spectral response of a color channel.

8. The method of claim 1, further comprising interpolating for other spatial positions not sampled.

9. The method of claim 1, wherein the spectral response for the sensor is sampled on the fly without requiring additional calibration images.

10. The method of claim 1, wherein the color correction matrix is a 4x4 color correction matrix.

11. A system for correcting a sensor for optical crosstalk and spectral crosstalk, comprising:

    a sensor configured to output pixel values corresponding to a scene being photographed; and
    signal processing logic executing to determine the spectral response for the plurality of color channels at different spatial locations on the sensor, implement a color correction matrix for each of the different spatial locations, and apply the corresponding color correction matrix at each of the different spatial locations in an image captured by the sensor, so that the spectral response at each spatial location is converted to match the spectral response at any one location on the image.

12. The system of claim 11, wherein the color correction matrix is a 4x4 matrix.

13. The system of claim 11, wherein the color correction matrix is defined as:

$$\begin{bmatrix} R \\ Gr \\ Gb \\ B \end{bmatrix} = \begin{bmatrix} K00 & K01 & K02 & K03 \\ K10 & K11 & K12 & K13 \\ K20 & K21 & K22 & K23 \\ K30 & K31 & K32 & K33 \end{bmatrix} \begin{bmatrix} R \\ Gr \\ Gb \\ B \end{bmatrix}$$

wherein R, Gr, Gb, and B describe red, green on red, green on blue, and blue color channels respectively; and K00 through K33 describe correction coefficients.

14. The system of claim 11, wherein the signal processing logic further normalizes the spectral response of a color channel.

15. The system of claim 11, wherein the spectral response at each spatial location is converted to match the spectral response of the sensor centered on the image.

**Patentansprüche**

1. Verfahren zur Korrektur eines Sensors für optische Nebensignaleffekte und spektrale Nebensignaleffekte, umfassend:

   Abtasten einer Spektralempfindlichkeit für eine Vielzahl von Farbkanälen an verschiedenen räumlichen Stellen an einem Sensor;
   Ausführen einer Farbkorrekturmatrix für jede der verschiedenen räumlichen Stellen; und
   Anwenden der entsprechenden Farbkorrekturmatrix an jeder der verschiedenen räumlichen Stellen in einem Bild, das vom Sensor derart erfasst worden ist, dass die Spektralempfindlichkeit an jeder der räumlichen Stellen umgesetzt wird, um der Spektralempfindlichkeit einer beliebigen Stelle am Bild zu entsprechen.

2. Verfahren nach Anspruch 1, wobei die Spektralempfindlichkeit für eine Vielzahl von Fenstern am Bild festgestellt wird.

3. Verfahren nach Anspruch 1, wobei die Spektralempfindlichkeit für jeden Pixel am Bild festgestellt wird.

4. Verfahren nach Anspruch 1, ferner umfassend zunächst die Feststellung, ob die Spektralempfindlichkeit basierend auf der räumlichen Position variiert.

5. Verfahren nach Anspruch 1, ferner umfassend zunächst die Feststellung, ob die Spektralempfindlichkeit eines Farbkanals an einer beliebigen räumlichen Stelle nicht linear skalierbar ist.

6. Verfahren nach Anspruch 1, ferner umfassend die Feststellung, ob die Spektralempfindlichkeit eines Farbkanals basierend auf der räumlichen Position überlappt.

7. Verfahren nach Anspruch 1, ferner umfassend das Normalisieren der Spektralempfindlichkeit eines Farbkanals.

8. Verfahren nach Anspruch 1, ferner umfassend das Interpolieren für andere räumliche Positionen, die nicht abgetastet wurden.

9. Verfahren nach Anspruch 1, wobei die Spektralempfindlichkeit für den Sensor spontan abgetastet wird, ohne zusätzliche Kalibrierungsbilder erforderlich zu machen.

10. Verfahren nach Anspruch 1, wobei die Farbkorrekturmatrix eine 4 x 4 Farbkorrekturmatrix ist.

11. System zur Korrektur eines Sensors für optische Nebensignaleffekte und spektrale Nebensignaleffekte, umfassend:

    einen Sensor, der konfiguriert ist, um Pixelwerte entsprechend einer fotografierten Szene auszugeben; und
    eine Signalverarbeitungslogik, die ausgeführt wird, um die Spektralempfindlichkeit für die Vielzahl von Farbkanälen an verschiedenen räumlichen Stellen am Sensor festzustellen, eine Farbkorrekturmatrix für jede der verschiedenen räumlichen Stellen auszuführen und die entsprechende Farbkorrekturmatrix an jeder der verschiedenen räumlichen Stellen in einem Bild, das vom Sensor erfasst worden ist derart anzuwenden, dass die Spektralempfindlichkeit an jeder räumlichen Stelle umgesetzt wird, um der Spektralempfindlichkeit an einer beliebigen der Stellen am Bild zu entsprechen.

12. System nach Anspruch 11, wobei die Farbkorrekturmatrix eine 4 x 4 Matrix ist.

13. System nach Anspruch 11, wobei die Farbkorrekturmatrix wie folgt definiert ist:

$$\begin{bmatrix} R \\ Gr \\ Gb \\ B \end{bmatrix} = \begin{bmatrix} K00 & K01 & K02 & K03 \\ K10 & K11 & K12 & K13 \\ K20 & K21 & K22 & K23 \\ K30 & K31 & K32 & K33 \end{bmatrix} \begin{bmatrix} R \\ Gr \\ Gb \\ B \end{bmatrix}$$

wobei R, Gr, Gb und B jeweils rote, grüne auf rote, grüne auf blaue und blaue Farbkanäle beschreiben; und K00 bis K33 jeweils Korrektur-Koeffizienten beschreiben.

14. System nach Anspruch 11, wobei die Signalverarbeitungslogik ferner die Spektralempfindlichkeit eines Farbkanals normalisiert.

15. System nach Anspruch 11, wobei die Spektralempfindlichkeit an jeder räumlichen Stelle umgesetzt wird, um der Spektralempfindlichkeit des mittig auf dem Bild befindlichen Sensors zu entsprechen.

## Revendications

1. Procédé de correction d'un capteur pour le brouillage optique et le brouillage spectral, comprenant :

- l'échantillonnage d'une réponse spectrale pour une pluralité de canaux de couleur à différents emplacements spatiaux sur un capteur ;
- l'implémentation d'une matrice de correction de couleur pour chacun des différents emplacements spatiaux ; et
- l'application de la matrice de correction de couleur correspondante à chacun des différents emplacements spatiaux dans une image capturée par le capteur de telle sorte que la réponse spectrale à chaque emplacement spatial est convertie pour correspondre à la réponse spectrale de tout emplacement sur l'image.

2. Procédé selon la revendication 1, dans lequel la réponse spectrale est déterminée pour une pluralité de fenêtres sur l'image.

3. Procédé selon la revendication 1, dans lequel la réponse spectrale est déterminée pour chaque pixel sur l'image.

4. Procédé selon la revendication 1, comprenant en outre tout d'abord la détermination du point de savoir si la réponse spectrale varie sur la base de l'emplacement spatial.

5. Procédé selon la revendication 1, comprenant en outre tout d'abord la détermination du point de savoir si la réponse spectrale d'un canal de couleur à un emplacement spatial donné n'est pas à échelle modifiable de manière linéaire.

6. Procédé selon la revendication 1, comprenant en outre la détermination du point de savoir si la réponse spectrale d'un canal de couleur se superpose sur la base d'un emplacement spatial.

7. Procédé selon la revendication 1, comprenant en outre la normalisation de la réponse spectrale d'un canal de couleur.

8. Procédé selon la revendication 1, comprenant en outre l'interpolation pour d'autres emplacements spatiaux non échantillonnés.

9. Procédé selon la revendication 1, dans lequel la réponse spectrale pour le capteur est échantillonnée en vol sans requérir à des images d'étalonnage additionnelles.

10. Procédé selon la revendication 1, dans lequel la matrice de correction de couleur est une matrice de correction de couleur 4x4.

11. Système de correction d'un capteur pour le brouillage optique et le brouillage spectral, comprenant :

- un capteur configuré pour délivrer en sortie des valeurs de pixel correspondant à une scène qui est photographiée ; et

- une logique de traitement de signal s'exécutant pour déterminer la réponse spectrale pour la pluralité de canaux de couleur à différents emplacements spatiaux sur le capteur, implémenter une matrice de correction de couleur pour chacun des différents emplacements spatiaux et appliquer la matrice de correction de couleur correspondante à chacun des différents emplacements spatiaux dans une image capturée par le capteur, de telle sorte que la réponse spectrale à chaque emplacement spatial est convertie pour correspondre à la réponse spectrale à tout emplacement sur l'image.

**12.** Système selon la revendication 11, dans lequel la matrice de correction de couleur est une matrice 4x4.

**13.** Système selon la revendication 11, dans lequel la matrice de correction de couleur est définie par :

$$
\begin{bmatrix} R \\ Gr \\ Gb \\ B \end{bmatrix} = \begin{bmatrix} K00 & K01 & K02 & K03 \\ K10 & K11 & K12 & K13 \\ K20 & K21 & K22 & K23 \\ K30 & K31 & K32 & K33 \end{bmatrix} \begin{bmatrix} R \\ Gr \\ Gb \\ B \end{bmatrix}
$$

dans laquelle R, Gr, Gb et B décrivent les canaux de couleur rouge, vert sur rouge, vert sur bleu et bleu, respectivement ; et
K00 à K33 décrivent des coefficients de correction.

**14.** Système selon la revendication 11, dans lequel la logique de traitement de signal normalise en outre la réponse spectrale d'un canal de couleur.

**15.** Système selon la revendication 11, dans lequel la réponse spectrale à chaque emplacement spatial est convertie pour correspondre à la réponse spectrale du capteur centré sur l'image.

# Fig. 1a

EP 2 279 612 B1

# Fig. 1b

EP 2 279 612 B1

# Fig. 2

150

200

| 1:1 | 1:2 | 1:3 | 1:4 | 1:5 | 1:6 | | | | | 1:n |
| 2:1 | 2:2 | 2:3 | 2:4 | 2:5 | 2:6 | ● ● ● | | | | 2:n |
| 3:1 | 3:2 | 3:3 | 3:4 | 3:5 | 3:6 | | | | | 3:n |

⋮                    ⋮

| i:1 | i:2 | i:3 | i:4 | i:5 | | ● ● ● | | | | i:n |

150

| 210a | | 210b | | 210c |
| 210d | | 210e | | 210f |
| 210g | | 210h | | 210i |

# Fig. 3

Upper Left Corner of Standard Sensor    300

Wavelength (nm)

Center of Standard Sensor    310

Wavelength (nm)

# Fig. 4

Red channel 9
different spatial locations

400

Green channel 9
different spatial locations

410

Blue channel 9
different spatial locations

420

15

# Fig. 5

Upper Left Corner of Compact Sensor — 500

Center of Compact Sensor — 510

# Fig. 6

Red channel 9 different spatial locations (600)

Green channel 9 different spatial locations (610)

Blue channel 9 different spatial locations (620)

# Fig. 7

700

Sample Spectral Response of
Sensor at Multiple Locations — 710

Apply Color Correction Matrix — 720

Convert Spectral Response At Each
Spatial Location to Match Spectral
Response At Any One Location of
Sensor — 730

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003234864 A1
- US 20030234872 A1